# EUROPÄISCHE PATENTSCHRIFT

(11) **EP 4 311 701 B1**
(45) Veröffentlichungstag und Bekanntmachung des Hinweises auf die Patenterteilung: **21.05.2025**
(21) Anmeldenummer: 23185820.0
(22) Anmeldetag: 17.07.2023
(51) Int. Cl.: B60K 11/00, B60K 11/04, B60K 11/02, B60K 1/00, B60R 13/08

(54) **KÜHLMODUL ZUR KÜHLUNG EINER TRAKTIONSBATTERIE**
COOLING MODULE FOR COOLING A TRACTION BATTERY
MODULE DE REFROIDISSEMENT POUR REFROIDIR UNE BATTERIE DE TRACTION

(30) Priorität: 29.07.2022 DE 102022119066
(43) Veröffentlichungstag der Anmeldung: 31.01.2024
(73) Patentinhaber: MAN Truck & Bus SE, 80995 München (DE)
(72) Erfinder: Peteranderl, Christian, 80995 München (DE); Engasser, Julius, 80995 München (DE); Heuer, Stefan, 80995 München (DE)
(74) Vertreter: v. Bezold & Partner Patentanwälte - PartG mbB

(56) Entgegenhaltungen:
- WO-A1-2021/048109
- DE-A1- 102019 004 930
- DE-A1- 102019 205 431
- DE-A1- 3 814 086
- FR-A1- 3 113 092
- US-A- 4 362 208

## Beschreibung

Die Erfindung betrifft ein Kühlmodul zur Kühlung einer Traktionsbatterie eines Kraftfahrzeugs, umfassend einen luftgekühlten Wärmeübertrager und einen Lüfter zur Luftkühlung des Wärmeübertragers.

Beim Laden und beim Betrieb der Traktionsbatterie elektrischer Fahrzeuge wird Verlustwärme in den Batterien freigesetzt, die durch ein Kühlmodul an die Umgebung abgeführt werden kann. Insbesondere bei hohen Betriebs- oder Ladeleistungen, wie sie insbesondere im Nutzfahrzeugbereich üblicherweise auftreten, führt das zu hohen Lärmemissionen durch die sich drehenden Lüfter und durch die strömende Luft. In vielen Situationen sind diese Lärmemissionen störend oder sogar unzulässig. Wenn beispielsweise die Traktionsbatterie innerhalb von Wohngebieten geladen werden soll, muss, insbesondere während der Nachtruhe, die vom Nutzfahrzeug ausgehende Lärmemission auf einem möglichst niedrigen Niveau gehalten werden. Zudem dient die Nutzfahrzeugkabine teilweise als Schlafplatz für den Fahrer des Nutzfahrzeugs, so dass die Reduzierung von Geräuschentwicklungen durch die Kühlung der Traktionsbatterie auch außerhalb von lärmempfindlichen Umgebungen nicht vernachlässigt werden darf. Da sich die Nutzfahrzeugkabine oft in unmittelbarer Nähe zum Kühlmodul befindet, ist die Anforderung an die Akustik in diesem Fall sogar besonders groß.

Die DE 10 2019 205 431 A1 beschreibt diesbezüglich eine Kühlvorrichtung zur Kühlung eines elektrisch angetriebenen oder antreibbaren Kraftfahrzeugs, aufweisend einen ersten und einen zweiten Wärmetauscher, einen den ersten und den zweiten Wärmetauscher verbindenden Luftführungskanal mit zwei diametral gegenüberliegenden Durchgangsöffnungen, welche mit einer ersten Luftführung und mit einer zweiten Luftführung reversibel verschließbar sind, und einen strömungstechnisch hinter dem zweiten Wärmetauscher angeordneten Kühlerlüfter.

Die WO 2021/048109 zeigt eine Kühlvorrichtung für ein Kraftfahrzeug, aufweisend eine Außenluftführung mit mindestens einem fahrzeugfrontseitigen Einlass und mit mindestens einem hierzu quer orientierten Auslass sowie mit einem dazwischen gebildeten ersten Luftführungskanalmit einem ersten Wärmetauscher und mit einem diesem zugeordneten Radiallüfter.

Die DE 10 2019 004 930 A1 betrifft eine Kühleinrichtung für eine Traktionsbatterie eines Kraftfahrzeugs zum Kühlen mittels Umgebungsluft, mit wenigstens einem Kühler und wenigstens einer Lüftereinrichtung, mittels welcher ein den Kühler durchströmender, einen Strömungsquerschnitt aufweisender Luftstrom erzeugbar ist, wobei die Lüftereinrichtung wenigstens einen Lüfterelement aufweist, welches außerhalb des Strömungsquerschnitts des Luftstroms angeordnet ist.

Die FR 3 113 092 A1 zeigt ein Kühlmodul für ein Elektro- oder Hybrid-Kraftfahrzeug, wobei das Kühlmodul dazu bestimmt ist, von einem Luftstrom durchströmt zu werden, und einen Satz von Wärmetauschern mit mehreren Austauschflächen umfasst. Die Austauschflächen sind derart hintereinander angeordnet, dass sie von demselben Luftstrom durchströmt werden. Die Austauschflächen sind mit einem Verhältnis von Höhe zu Breite von weniger als 60 % miteinander verbunden.

Der Erfindung liegt die Aufgabe zu Grunde, eine verbesserte Technik zum Kühlen der Traktionsbatterie zu schaffen. Insbesondere soll die durch Kühlung verursachte Geräuschemission reduziert werden.

Die Aufgabe wird durch die Merkmale der unabhängigen Ansprüche gelöst. Vorteilhafte Weiterbildungen sind in den abhängigen Ansprüchen und der Beschreibung angegeben.

Gemäß einem allgemeinen Gesichtspunkt der Erfindung wird ein Kühlmodul zur Kühlung einer Traktionsbatterie eines Kraftfahrzeugs, vorzugsweise Nutzfahrzeugs, bereitgestellt. Das Kühlmodul umfasst einen luftgekühlten Wärmeübertrager, der von einem Kühlmittel durchströmbar und an einen Kühlmittelkreislauf anschließbar ist. Außerdem umfasst das Kühlmodul einen Lüfter zur Luftkühlung des Wärmeübertragers, wobei der Lüfter als Radiallüfter ausgeführt ist.

Bei einem Radiallüfter, auch als Radialventilator oder Radialgebläse bezeichnet, wird die Luft axial, das heißt parallel zur Drehachse des Laufrades, angesaugt. Durch die Rotation des Laufrades wird die strömende Luft umgelenkt und um 90° versetzt, sodass die Luft radial, das heißt senkrecht zur Drehachse des Laufrades, ausgeblasen wird. Bei einer weiteren Bauform eines Radiallüfters wird die Luft sowohl radial angesaugt, als auch radial ausgeblasen. Diese Bauform wird teilweise auch als Doppel-Radiallüfter bezeichnet. Wenn in diesem Dokument ohne weitere Spezifizierung von einem Radiallüfter gesprochen wird, sind ausdrücklich immer beide möglichen Bauformen gemeint. Im Gegensatz dazu wird bei einem Axiallüfter die Luft axial angesaugt und axial ausgeblasen. Der Vorteil eines Radiallüfters gegenüber einem Axiallüfter besteht darin, dass er bei gleichem Luftdurchsatz eine geringere Geräuschemission verursacht. Außerdem kann mit einem Radiallüfter eine höhere Druckdifferenz erzeugt werden.

Durch die Ausführung des Lüfters als Radiallüfter kann daher die Geräuschemission reduziert werden, ohne dass die Kühlleistung reduziert werden muss. Vorzugsweise kann die Rotationsgeschwindigkeit des Radiallüfters durch eine Steuerung verändert werden. Auf diese Weise kann die Temperatur der Traktionsbatterie reguliert werden.

In einer weiteren bevorzugten Ausführungsform kann das Kühlmodul in einer baulichen Einheit, z. B. als eine vormontierte Komponente oder Baugruppe, bereitgestellt werden. Auf diese Weise ist ein schneller und flexibler Einbau des Kühlmoduls an einer beliebigen Stelle des Kraftfahrzeugs möglich. Zusätzlich oder alternativ können der Wärmeübertrager und der Lüfter von einem gemeinsamen Gehäuse umhaust sein. Vorteilhaft kann ein kompakter Aufbau realisiert werden. Das Gehäuse bietet die Möglichkeit das Kühlmodul unkompliziert an seinem Einsatzort zu befestigen. Das Gehäuse kann hierzu zweckmäßig ausgeführte Befestigungsstellen aufweisen, z. B. zur Aufnahme von Befestigungsmitteln. Die Wahl des Befestigungsmittels, z.B. Klemmen, Schrauben, oder Schweißnähte, kann dabei flexibel an die jeweilige Einbausituation angepasst werden. Außerdem kann das Gehäuse zur Richtungsleitung der strömenden Luft verwendet werden. Gleichzeitig bietet das Gehäuse einen zusätzlichen Schutz gegen Lärmemissionen.

Der Wärmeübertrager kann stromauf zu einer Luftzuführungsöffnung des Radiallüfters angeordnet sein. Alternativ kann der Wärmeübertrager stromab zu einer Luftaustrittsöffnung des Radiallüfters angeordnet sein. Mit stromauf und stromab und wird eine Position, in diesem Fall die Position des Wärmeübertragers, relativ zu einer anderen Komponente aus der Sichtweise der strömenden Luft bezeichnet. Befindet sich der Wärmeübertrager stromauf zu einer Luftzuführungsöffnung des Radiallüfters, strömt ein Luftteilchen zuerst durch den Wärmeübertrager und dann durch die Luftzuführungsöffnung des Radiallüfters. Umgekehrt wird zuerst die Luftaustrittsöffnung des Radiallüfters und anschließend der Wärmeübertrager von einem Luftteilchen durchströmt, wenn sich der Wärmeübertrager stromab befindet.

In einer besonders bevorzugten Ausführungsvariante kann der Wärmeübertrager einen ersten und einen zweiten Wärmeübertragerabschnitt umfassen. Der erste Wärmeübertragerabschnitt ist stromauf zu einer Luftzuführungsöffnung des Radiallüfters angeordnet und der zweite Wärmeübertragerabschnitt ist stromab einer Luftaustrittsöffnung des Radiallüfters angeordnet.

Durch die Verwendung eines Radiallüfters kann eine höhere Druckdifferenz erzeugt werden als mit einem vergleichbar dimensionierten Axiallüfter. Daher ist es möglich jeweils einen Wärmeübertragerabschnitt stromauf und stromab zum Radiallüfter vorzusehen, ohne den Luftstrom nennenswert zu behindern. Auf diese Weise stehen der strömenden Luft zwei Wärmeübertragerabschnitte zur Abgabe von Wärme an die Umgebungsluft zur Verfügung, so dass die Effizienz des Kühlmoduls erhöht wird.

Gemäß einer vorteilhaften Ausführungsvariante kann der zweite Wärmeübertragerabschnitt mantelförmig um den Radiallüfter herum angeordnet sein. Besonders vorzugsweise kann der zweite Wärmeübertragerabschnitt zylinderförmig oder abschnittsweise quaderförmig um den Radiallüfter herum angeordnet, oder lediglich an einer Seite des Radiallüfters angeordnet sein. Bei einem Radiallüfter wird die ausströmende Luft um 90° gegenüber der Drehachse des Laufrades versetzt ausgeblasen. Durch die Anordnung des zweiten Wärmeübertragerabschnitts um den Radiallüfter herum kann die ausströmende Luft damit besonders effizient in den zweiten Wärmeübertragerabschnitt eingeleitet werden, wobei die effektive Fläche des Wärmeübertragers durch die mantelförmige Gestaltung möglichst groß ist. Die verschiedenen geometrischen Bauformen des zweiten Wärmeübertragerabschnitts erlauben es, das Kühlmodul ideal an den vorhandenen Bauraum anzupassen.

In einer weiteren Ausführungsform kann das Kühlmodul ferner eine Schallisolierung, vorzugsweise einen akustischen Absorber oder ein schallabsorbierendes Material, mit dem das Kühlmodul zumindest partiell ausgekleidet ist, umfassen. Das bewertete Schalldämmmaß der Schallisolierung ist dabei vorzugsweise größer als das bewertete Schalldämmmaß eines einfachen Gehäuses aus einfachen Kunststoffwänden oder Metallblechen, z.B. bevorzugt größer als 30 dB und besonders bevorzugt größer als 40 dB. Bei einem schallabsorbierenden Material kann es sich beispielsweise um einen Schaumstoff, Schaumglas oder um Faserdämmplatten handeln. Durch die zusätzliche Schallisolierung kann die Lärmemission durch den Radiallüfter zusätzlich verringert werden.

Gemäß einer weiteren vorteilhaften Ausführungsvariante kann die Schallisolierung an einem Lufteintrittsbereich des Kühlmoduls und/oder an einem Luftaustrittsbereich des Kühlmoduls angeordnet sein. Da an diesen Stellen eine erhöhte Schallemission an die Umgebung stattfindet, ist die Anbringung einer Schallisolierung an diesen Stellen besonders wirkungsvoll.

In einer besonders bevorzugten Ausführungsvariante kann ein Gehäuse des Kühlmoduls schallisoliert sein. Vorzugsweise kann im Wesentlichen eine komplette Außenwandung des Gehäuses schallisoliert, beispielsweise mit einem schallabsorbierenden Material ausgekleidet, sein. Auf diese Weise kann auch die Lärmemission, die durch Schwingungen oder Vibrationen der Gehäusewand entstehen würden, verhindert oder zumindest verringert werden. Im Wesentlichen bedeutet hier, dass überall dort eine Schallisolierung vorhanden ist, wo keine konstruktiven Erfordernisse im Weg stehen. So kann zum Beispiel zur Befestigung von Schrauben oder im Bereich von Ecken oder Kanten eine Aussparung in der Schallisolierung vorgesehen sein.

In einer weiteren Ausführungsform kann das Kühlmodul ferner ein Schalllabyrinth umfassen, das an einem Lufteintrittsbereich und/oder einem Luftaustrittsbereich des Kühlmoduls angeordnet ist. Als Schalllabyrinth wird eine Luftleitstruktur verstanden, die die strömende Luft, vorzugsweise mehrfach, durch Hindernisse im Strömungskanal in ihrer Strömungsrichtung verändert, sodass ein Teil der Lärmemission aufgefangen wird. Beispielsweise kann das Schalllabyrinth einen mäanderförmigen Strömungsweg der Luft erzeugen. Besonders effektiv ist das Schallabyrinth, wenn die Hindernisse ebenfalls aus schallabsorbierendem Material ausgeführt werden. Die Behinderung des Luftstroms durch die zusätzlichen Hindernisse im Strömungskanal ist aufgrund der verbesserten Druckdifferenz, die von einem Radiallüfter erzeugt werden kann, unproblematisch.

In einer Ausführungsform kann eine Rotationachse des Radiallüfters parallel zur Lufteintrittsrichtung sein, oder der Radiallüfter kann als Doppelradialgebläse ausgeführt sein, dessen Rotationsachse senkrecht zu einer Lufteintrittsrichtung ist. In dieser Ausführungsform entspricht die Richtung der in das Kühlmodul einströmenden Luft der Richtung, in der die Luft in den Radiallüfter hineinströmt. Dadurch kann ein besonders effizienter Luftstrom in den Radiallüfter hinein gewährleistet werden.

Erfindungsgemäß wird ein Kraftfahrzeug, vorzugsweise ein Nutzfahrzeug, bereitgestellt, das zumindest teilweise elektrisch angetrieben ist. Das Kraftfahrzeug weist eine Traktionsbatterie und ein Kühlmodul zum Kühlen der Traktionsbatterie entsprechend der vorherigen Beschreibung auf.

Das Kraftfahrzeug ist dazu ausgebildet, das Kühlmodul zum Kühlen der Traktionsbatterie während des Aufladens an einer externen Ladestation zu verwenden. Wie bereits beschrieben, kann die Anforderung an die Reduzierung von Lärmemissionen, die beim Laden der Traktionsbatterie entstehen, besonders hoch sein. Die beschriebenen Ausführungsformen der Erfindung können diese Reduzierung von Lärmemissionen gewährleisten.

Das Kraftfahrzeug weist ferner ein weiteres Kühlmodul zur Kühlung einer Traktionsbatterie im Fahrbetrieb des Kraftfahrzeugs auf, welches nachfolgend zur besseren Unterscheidung als Fahrkühlmodul bezeichnet wird. Das Fahrkühlmodul umfasst einen luftgekühlten zweiten Wärmeübertrager, der von einem Kühlmittel durchströmbar und an einen Kühlmittelkreislauf anschließbar ist, und einen zweiten Lüfter zur Luftkühlung des Wärmeübertragers, wobei der zweite Lüfter als Axiallüfter ausgeführt ist.

Das Fahrkühlmodul kann derart am Kraftfahrzeug angebracht werden, dass der Lüfter des Fahrkühlmoduls während der Fahrt gut vom Fahrtwind durchströmt wird. Insbesondere während schnellerer Fahrt wird ein großer Teil der Geräuschemission des Fahrzeugs durch den Motor und durch das Abrollen der Reifen auf dem Untergrund verursacht. Die Geräuschemission durch die Kühlung der Traktionsbatterie spielt daher eine weniger große Rolle als es beim Laden im Stillstand der Fall ist. Ein Axiallüfter kann während der Fahrt besonders gut durch den Fahrtwind durchströmt werden, sodass eine besonders effiziente Kühlung des Fahrkühlmoduls durch den Fahrtwind gewährleistet werden kann. Wird die Rotationsgeschwindigkeit des Axiallüfters steuerbar ausgeführt, kann die Temperatur der Traktionsbatterie auf diese Weise reguliert werden.

Ein Kühlkreislauf bzw. ein Kühlmodul der Traktionsbatterie und der Wärmeübertrager sind dabei fluidisch miteinander verbunden. Das Kühlmittel nimmt die Wärme die beim Betrieb der Traktionsbatterie entsteht auf und gibt sie an den Wärmeübertrager ab. Durch die fließende Bewegung der Kühlmittelmoleküle kann ein effizienterer Wärmetransport hergestellt werden als durch ausschließliche Wärmekonvektion durch wärmeleitende Materialen. Das Kühlmittel kann neben typischen Kühlmitteln wie Wasser-Glykol-Gemische auch als dielektrisches Fluid ausgeführt sein. Dabei handelt es sich beispielweise um Öle, Kältemittel oder Ester, die die Batteriezellen der Traktionsbatterie direkt, das heißt ohne Kühlplatten oder ähnliche Aufbauten, im Rahmen einer Immersions-Kühlung kühlen können.

Das Kraftfahrzeug ist dazu ausgebildet, im Fahrbetrieb des Kraftfahrzeugs die Traktionsbatterie primär mittels des Fahrkühlmoduls zu kühlen, derart, dass hierbei das Kühlmodul nicht oder nur unterstützend zum Fahrkühlmodul betrieben wird. Im Nicht-Fahrbetrieb des Kraftfahrzeugs wird die Traktionsbatterie beim Ladevorgang primär mittels des Kühlmoduls gekühlt, derart, dass hierbei das Fahrkühlmodul nur unterstützend zum Kühlmodul betrieben wird.

Auf diese Weise werden die Ausgestaltungen des Fahrkühlmoduls zur idealen Kühlung der Traktionsbatterie während der Fahrt, sowie der besonders leise Betrieb des Kühlmoduls während des Ladevorgangs, ideal miteinander kombiniert. Ob, und wenn ja zu welchem Anteil, das jeweils nicht primäre Modul unterstützend betrieben wird kann entsprechend der jeweils auftretenden Situation optimiert werden. Beispielsweise könnte beim Ladevorgang die Traktionsbatterie ausschließlich über das leise Kühlmodul betrieben werden. Wenn der Radiallüfter des Kühlmoduls allerdings bei einer hohen Drehzahl betrieben werden muss um die notwendige Kühlleistung zu erreichen, kann erfindungsgemäß, die Drehzahl des Radiallüfters etwas reduziert werden und zum Ausgleich das Fahrkühlmodul mit geringer Lüfter-Drehzahl unterstützend zum Kühlmodul dazu geschaltet werden, sodass die gesamte Geräuschemission minimiert wird.

Gemäß einer weiteren vorteilhaften Ausführungsform kann das Kraftfahrzeug ferner einen Kühlkreislauf für die Traktionsbatterie aufweisen, der eine Zirkulationspumpe und eine Kühlmittleitung, die abschnittsweise die Traktionsbatterie durchströmt, und/oder die abschnittsweise durch die Traktionsbatterie geführt ist und/oder an diese zur Bereitstellung einer Kühlmittelzufuhr- und abfuhr angeschlossen ist, umfassen. Der Wärmeübertrager des Kühlmoduls ist in diesem Fall an den Kühlkreislauf oder an einem mit dem Kühlkreislauf thermisch gekoppelten Kältekreislauf oder Hochtemperatur-Kühlkreislauf angeschlossen.

Ein Kühlkreislauf bzw. ein Kühlmodul der Traktionsbatterie und der Wärmeübertrager sind durch die Kühlmittelleitung fluidisch miteinander verbunden. Das Kühlmittel nimmt die Wärme von der Traktionsbatterie auf und leitet sie an den Wärmeübertrager weiter. Auf diese Weise müssen sich die Traktionsbatterie und der Wärmeübertrager nicht in unmittelbarem Kontakt befinden. Stattdessen können sich die Traktionsbatterie und der Wärmeübertrager an unterschiedlichen Stellen im bzw. am Kraftfahrzeug befinden, die für den jeweiligen Einsatzzweck besonders gut geeignet sind. Die Zirkulationspumpe fördert das Kühlmittel in der gewünschten Flussrichtung durch die Kühlmittelleitung und stellt so einen effizienten Wärmetransport sicher.

Die Zirkulationspumpe kann vorzugsweise steuerbar ausgeführt sein, sodass der Kühlmittelfluss durch die Kühlmittelleitung reguliert werden kann, wodurch eine weitere Möglichkeit zur Steuerung der Temperatur der Traktionsbatterie gegeben ist.

Ein Kältekreislauf umfasst typischerweise eine Verdichterpumpe und ein Expansionsventil, mit denen ein Kältemittel verdichtet und wieder entspannt werden kann. Der Wärmeübertrager kann optional mit einem Kältekreislauf gekoppelt sein. Die Kopplung des Wärmeübertragers mit einem solchen Kältekreislauf macht es möglich, dass die Temperatur der Traktionsbatterie unter die Umgebungstemperatur gekühlt werden kann. Bei vielen der heute verwendeten Batterietypen ist das insbesondere während der warmen Jahreszeiten oder in generell heißen Gebieten vorteilhaft, da anderenfalls die Leistungsaufnahme oder die Leistungsabgabe der Traktionsbatterie reduziert werden müsste. Durch den Betrieb der Traktionsbatterie im idealen Temperaturbereich kann einer vorschnellen Alterung der Traktionsbatteriezellen entgegengewirkt werden.

Alternativ oder zusätzlich kann der Wärmeübertrager optional mit einem Hochtemperatur-Kühlkreislauf gekoppelt sein. Bei der Kopplung des Wärmeübertragers mit einem Hochtemperatur-Kühlkreislauf gibt es zusätzlich zu dem Kühlmittelkreis oder dem Kältemittelkreis der mit der Traktionsbatterie verbunden ist noch mindestens einen weiteren Kühlkreislauf. Die Kopplung erfolgt typischerweise durch weitere Wärmeübertrager. Diese mehrstufige Ausführungsform gibt die Möglichkeit, zusätzlich zur Traktionsbatterie auch weitere Fahrzeugkomponenten wie zum Beispiel einen Antriebsmotor kühlen zu können, auch wenn diese weiteren Komponenten bei unterschiedlichen, zum Beispiel höheren, Temperaturen als die Traktionsbatterie betrieben werden sollen.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Darstellung eines Kühlmoduls zur Kühlung einer Traktionsbatterie eines Kraftfahrzeugs gemäß einem Ausführungsbeispiel der vorliegenden Offenbarung;
- Figur 2: eine schematische Darstellung eines Kühlmittelkreislaufs zur Kühlung einer Traktionsbatterie gemäß einem weiteren Ausführungsbeispiel der vorliegenden Offenbarung;
- Figur 3: eine schematische Darstellung eines Kühlmoduls zur Kühlung einer Traktionsbatterie 2 eines Kraftfahrzeugs gemäß einem weiteren Ausführungsbeispiel der vorliegenden Offenbarung, wobei sich ein Wärmeübertragerabschnitt des Wärmeübertragers im Luftaustrittsbereich befindet;
- Figur 4: eine schematische Darstellung eines Kühlmoduls zur Kühlung einer Traktionsbatterie eines Kraftfahrzeugs gemäß einem weiteren Ausführungsbeispiel der vorliegenden Offenbarung, wobei der Radiallüfter als Doppel-Radiallüfter ausgeführt ist;
- Figur 5: eine schematische Darstellung eines Kühlmoduls zur Kühlung einer Traktionsbatterie eines Kraftfahrzeugs gemäß einem weiteren Ausführungsbeispiel der vorliegenden Offenbarung, wobei der Radiallüfter als Doppel-Radiallüfter ausgeführt ist und sich ein Wärmeübertragerabschnitt des Wärmeübertragers im Luftaustrittsbereich befindet;
- Figur 6: eine schematische Darstellung eines Kühlmoduls zur Kühlung einer Traktionsbatterie eines Kraftfahrzeugs gemäß einem weiteren Ausführungsbeispiel der vorliegenden Offenbarung, wobei der Wärmeübertrager und der Radiallüfter von einem gemeinsamen Gehäuse umhaust sind; und
- Figur 7: eine schematische Darstellung eines Kühlmoduls zur Kühlung einer Traktionsbatterie eines Kraftfahrzeugs gemäß einem weiteren Ausführungsbeispiel der vorliegenden Offenbarung, wobei der Radiallüfter als Doppel-Radiallüfter ausgeführt ist, sich ein Wärmeübertragerabschnitt des Wärmeübertragers im Luftaustrittsbereich befindet und ein Schalllabyrinth im Lufteintrittsbereich angeordnet ist.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

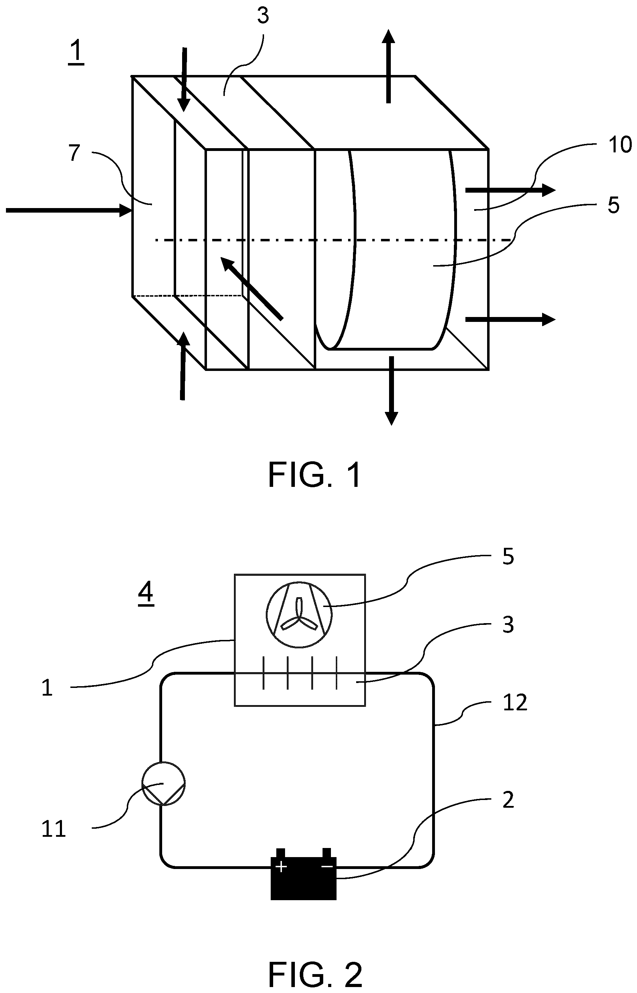

Die Figur 1 zeigt ein Kühlmodul 1, das zur Kühlung einer Traktionsbatterie 2 eines Kraftfahrzeugs ausgebildet ist. Die Traktionsbatterie 2 eines Kraftfahrzeugs produziert während der der Leistungsaufnahme oder der Leistungsabgabe Verlustwärme. Sobald die Temperatur eine zulässige Maximaltemperatur überschreitet, muss diese überschüssige Wärme abgeführt werden. Dazu wird die Traktionsbatterie 2 beispielsweise durch einen Kühlmittelkreislauf 4 mit dem Kühlmodul 1 gekoppelt. Die Wärme wird von dem Wärmeübertrager 3 des Kühlmoduls 1 aufgenommen und kann anschließend an die Umgebung abgeführt werden.

Dazu strömt kühle Umgebungsluft durch den Lufteintrittsbereich 7 in das Kühlmodul 1 hinein. Anschließend trifft die Luft auf den Wärmeübertrager 3, der durch die Verlustwärme der Traktionsbatterie 2 erwärmt wurde. Beim Durchströmen des Wärmeübertragers 3 nimmt die Luft Wärme vom Wärmeübertrager 3 auf und erwärmt sich. Der Wärmeübertrager 3 befindet sich im in der Figur gezeigten Beispiel stromauf zur Luftzuführungsöffnung des Radiallüfters 5. Bei dem Wärmeübertrager 3 kann es sich beispielsweise um einen Lamellenradiator aus Aluminium oder einem anderen Material mit guter Wärmeleitfähigkeit handeln. Der Radiallüfter 5 fördert die erwärmte Luft in den Luftaustrittsbereich 10, sodass die Verlustwärme an die Umgebung abgegeben wird. Die gestrichelte Linie zeigt die Rotationsachse des Radiallüfters 5. Die Pfeile deuten mögliche Richtungsvektoren der strömenden Luft an.

Die Verwendung eines Radiallüfters 5 bietet gegenüber der Verwendung des typischerweise verwendeten Axiallüfters den Vorteil, dass der Radiallüfter 5 bei gleicher Leistung leiser ist und damit die Lärmemission beim Betrieb des Kühlmoduls 1 verringert werden kann. Außerdem kann durch den Radiallüfter 5 eine größere Druckdifferenz zwischen dem Lufteintrittsbereich 7 und dem Luftaustrittsbereich 10 erzeugt werden.

Die Figur 2 zeigt eine weitere Ausführungsform der Erfindung. Eine Traktionsbatterie 2 ist mittels Kühlmittelleitungen 12 mit dem Wärmeübertrager 3 des Kühlmoduls 4 gekoppelt. In der Kühlmittelleitung 12 befindet sich ein Kühlmittel, das von der Zirkulationspumpe 12 im Wesentlichen gegen den Uhrzeigersinn durch den Kühlmittelkreislauf 4 gefördert wird. Das Kühlmittel nimmt Verlustwärme von der Traktionsbatterie 2 auf und gibt sie anschließend an den Wärmeübertrager 3 ab. Ein Radiallüfter 5 fördert Umgebungsluft derart an dem Wärmeübertrager 3 vorbei, oder durch den Wärmeübertrager 3 hindurch, dass die Umgebungsluft die Verlustwärme aufnehmen und an die Umgebung abführen kann.

Die Rotationsgeschwindigkeit des Radiallüfters 5 und die Leistung der Zirkulationspumpe 11 können von einer Steuerung situationsabhängig verändert werden. Auf diese Weise kann die Temperatur der Traktionsbatterie 2 auf eine gewünschte Temperatur reguliert werden, sodass einer vorschnellen Alterung der Traktionsbatterie 2 entgegengewirkt werden kann. Die Steuerung kann von einer zentralen Fahrzeugsteuerung, etwa einem Board-Computer, oder von einer eigenen Steuereinheit vorgenommen werden.

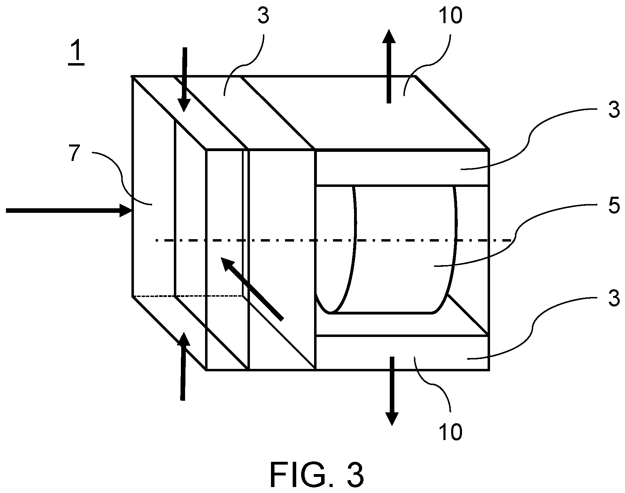

Die Figur 3 zeigt eine weitere Ausführungsvariante der Erfindung. Der Unterschied zu der in der Figur 1 gezeigten Ausführungsform besteht darin, dass der Wärmeübertrager 3 aus mehreren Wärmeübertragerabschnitten besteht. Wie in der Figur 1 strömt die kühle Umgebungsluft durch den Lufteintrittsbereich 7 in den ersten Abschnitt des Wärmeübertragers 3 hinein und nimmt dort Verlustwärme auf. Bei dem Radiallüfter handelt es sich in diesem Fall um ein Einfach-Radialgebläse. Die Luft strömt entlang der gestrichelten Rotationsachse in den Radiallüfter 5 hinein und wird dort durch die rotierenden Schaufeln des Radiallüfters 5 um etwa 90° gedreht. Anschließend strömt die Luft in einen weiteren Abschnitt des Wärmeübertragers 3, wo sie weitere Verlustwärme aufnehmen kann. Die möglichen Wege der strömenden Luft sind wieder durch Pfeile angedeutet. Im Gegensatz zu der in der Figur 1 gezeigten Variante ist in der in der Figur gezeigten Variante die Strömungsrichtung stromab zum Radiallüfter 5 entlang der Rotationsachse blockiert, sodass die gesamte ausströmende Luft durch den zweiten Abschnitt des Wärmeübertragers 3 geleitet wird. Der zweite Abschnitt des Wärmeübertragers 3 kann zusammenhängend sein und den Radiallüfter 5 vollständig oder teilweise ummanteln (aus Übersichtlichkeitsgründen nicht dargestellt). Alternativ kann der zweite Abschnitt aus mehreren nicht zusammenhängenden Bauteilen, zum Beispiel aus mehreren kleineren Lamellenradiatoren, bestehen. Entscheidend ist, dass sich der erste Abschnitt des Wärmeübertragers 3 stromauf zur Lufteintrittsöffnung des Radiallüfters 5 befindet und der zweite Abschnitt stromab zur Luftaustrittsöffnung des Radiallüfters 5 angeordnet ist.

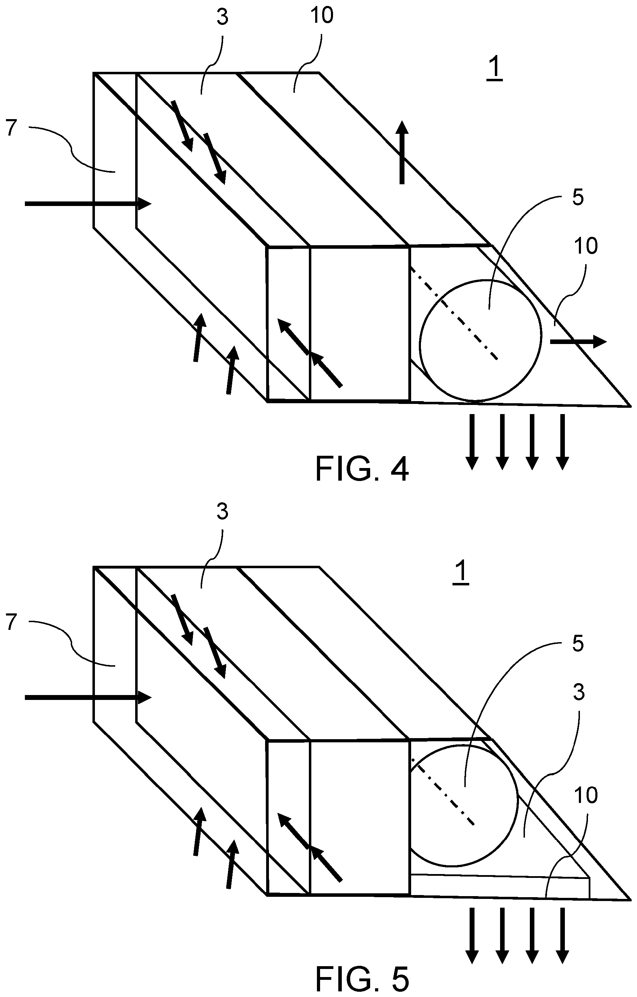

Die Figur 4 zeigt eine Ausführungsform der Erfindung, in der der Radiallüfter 5 als Doppel-Radiallüfter ausgeführt ist. Wie in der Figur 1 strömt Umgebungsluft entlang der Pfeilrichtungen in den Lufteintrittsbereich 7 des Kühlmoduls 1 hinein und nimmt Verlustwärme aus dem Wärmeübertrager 3 auf. Die Rotationsachse des Doppel-Radiallüfters 5 ist wieder durch eine gestrichelte Linie dargestellt. Die durch den Wärmeübertrager 3 erwärmte Luft strömt senkrecht zur Rotationsachse in den Radiallüfter 5 hinein und strömt ebenfalls senkrecht, zur Rotationsachse wieder durch den Luftaustrittsbereich 10 hinaus.

Der Vorteil eines Doppel-Radiallüfters kann sich vor allem aus der idealen Ausnutzung des verfügbaren Bauraums des Kraftfahrzeugs ergeben. Ein Doppel-Radiallüfter bietet die gleichen Vorteile gegenüber einem Axiallüfter wie ein Einzel-Radialgebläse, ist aber entlang der Rotationsachse länger und senkrecht zur Rotationsachse schmaler. Der Wärmeübertrager 3 kann bei gleicher Leistungsdimensionierung in dieser Ausführungsvariante entsprechend ebenfalls länger und schmaler ausgeführt werden.

Die Figur 5 zeigt eine Ausführungsvariante die im Wesentlichen der Kombination der Figuren 3 und 4 entspricht. Der Radiallüfter 5 ist wie in Figur 4 als Doppel-Radiallüfter ausgeführt. Die Rotationsachse ist durch die gestrichelte Linie dargestellt. Der Unterschied zur Figur 4 besteht darin, dass der Wärmeübertrager 3 entsprechend des Beispiels der Figur 3 einen zweiten Abschnitt des Wärmeübertragers 3 im Luftaustrittsbereich 10 umfasst. Durch die verlängerte Bauform des Doppel-Radiallüfters gegenüber dem Einzel-Radialgebläse können auch die Abschnitte des Wärmeübertragers 3 lang und schmal ausgeführt werden, ohne dass sich die Leistung des Wärmeübertragers 3 verringert. Der zweite Abschnitt des Wärmeübertragers 3 ermöglicht eine verbesserte Wärmeabfuhr von Verlustwärme der Traktionsbatterie 2 an die Umgebungsluft.

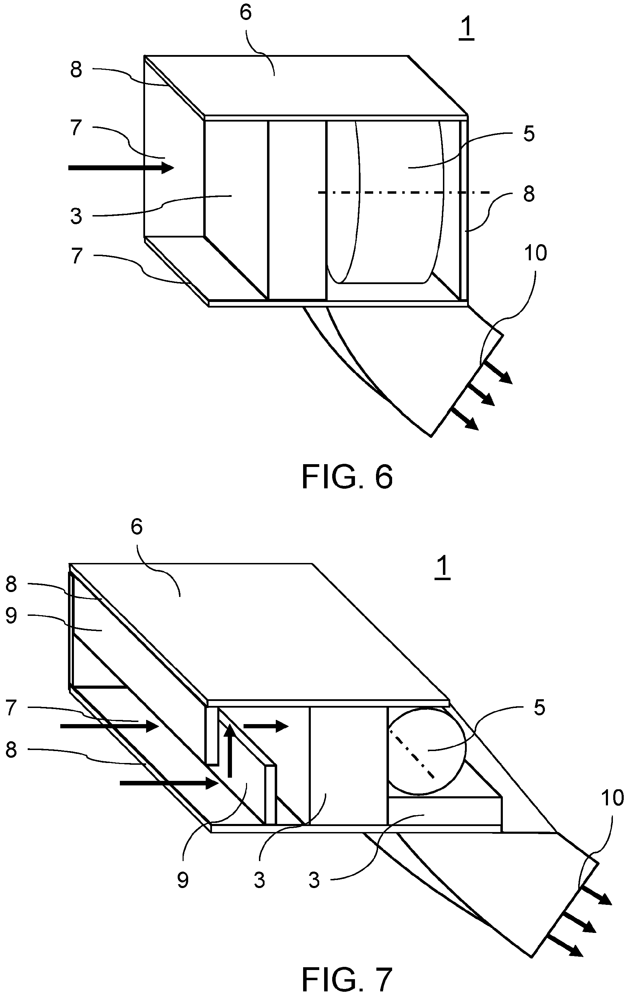

Die Figur 6 zeigt eine Ausführungsform, bei der der Wärmeübertrager 3 und der Radiallüfter 5 von einem gemeinsamen Gehäuse 6 umhaust sind. Die Wände des Gehäuses 6 sind mit einer Schallisolierung 8 ausgekleidet. Bei der Schallisolierung 8 kann es sich beispielsweise um Dämmmatten aus einem Gummi, Styropor oder Schaumstoffmaterial handeln, die an den Gehäusewänden aus Metallblechen oder Kunststoffwänden befestigt werden. Alternativ kann das Gehäuse selbst aus einem besonders schallisolierenden Material, beispielsweise Hartschaumplatten, gefertigt werden. In diesem Fall ist das bewertete Schalldämmmaß des Gehäusematerials größer als das bewertete Schalldämmmaß eines einfachen Gehäuses aus Kunststoffwänden oder Metallblechen, zum Beispiel größer als 30 dB und besonders bevorzugt größer als 40 dB.

Durch das Gehäuse 6 kann das Kühlmodul 1 als Einheit am Kraftfahrzeug befestigt werden, was den Einbauaufwand reduziert. Außerdem sind der Wärmeübertrager 3 und der Radiallüfter 5 vor Umgebungseinflüssen wie Nässe oder Verschmutzungen geschützt, die ansonsten im Lauf der Zeit die Effektivität der Komponenten verringern könnten. Des Weiteren kann die strömende Luft durch das Gehäuse 6 unkompliziert geleitet werden. Dazu befindet sich im in der Figur gezeigten Beispiel ein Trichter an der Luftaustrittsöffnung 10 des Gehäuses 6. Auf diese Weise kann verhindert werden, dass die warme, ausströmende Luft auf Fahrzeugkomponenten trifft, die möglichst vor zusätzlicher Erwärmung geschützt werden sollen.

Die Schallisolierung 8 sorgt dafür, dass Schall, der durch die strömende Luft entsteht, absorbiert wird. Lärmemissionen durch die strömende Luft und die Rotation des Radiallüfters 5 dringen damit nicht, oder zumindest nur in verringerter Intensität, nach außen. Außerdem sorgt die Schallisolierung 8 dafür, dass Schwingungen und Vibrationen der Wände des Gehäuses 6 vermieden werden, da das Gehäuse 6 selber ansonsten zur Schallquelle werden könnte. Der Trichter an der Luftaustrittsöffnung 10 des Gehäuses 6 kann außerdem verhindern, dass die ausströmende Luft auf Fahrzeugkomponenten trifft, die in Schwingung oder Vibration versetzt werden, und damit unerwünschte Lärmemission verursachen würden.

Die Figur 7 zeigt ein Ausführungsbeispiel, das weitgehend dem Ausführungsbeispiel der Figur 5 entspricht, wobei der Wärmeübertrager 3 und der als Doppel-Radiallüfter ausgeführte Radiallüfter 5 von einem Gehäuse 6 umhaust sind. Analog zum Ausführungsbeispiel der Figur 6 ist das Gehäuse 6 mit einer Schallisolierung 8 ausgekleidet und es befindet sich ein Trichter an der Luftaustrittsöffnung 10 des Kühlmoduls 1.

Zusätzlich ist in der gezeigten Figur ein Schalllabyrinth 9 an der Lufteintrittsöffnung 7 des Kühlmoduls 1 angeordnet. Die Pfeile deuten an, dass die einströmende Umgebungsluft durch das Schalllabyrinth 9 mehrfach umgeleitet wird, bevor sie auf den ersten Abschnitt des Wärmeübertragers 3 trifft. Auf diese Weise kann Luft ohne nennenswerte Leistungseinbußen durch das Kühlmodul 1 geleitet werden. Der Schall der beispielsweise durch das Auftreffen der strömenden Luft auf den Wärmeübertrager 3 entsteht und der ohne das Schallabyrinth 9 entgegen der Strömungsrichtung nach außen gelangen würde, wird durch die Wandelemente des Schalllabyrinths 9 im inneren des Gehäuses 6 gehalten. Damit kann die Lärmemission des Kühlmoduls 1 weiter reduziert werden.

Der Übersichtlichkeit halber wurde ein einfaches Schalllabyrinth 9 dargestellt, bei dem die strömende Luft mindestens zwei Mal umgelenkt wird. Es sind aber auch kompliziertere Schallabyrinthe 9 möglich, bei denen eine häufigere Umlenkung der strömenden Luft vorgenommen wird. Außerdem ist die Verwendung eines Schallabyrinths im Zusammenspiel mit der Ausführungsvariante eines Doppel-Radiallüfters und eines aus zwei Abschnitten bestehenden Wärmeübertragers 3 nur beispielhaft gemeint. Ein entsprechend an den vorhandenen Bauraum angepasstes Schalllabyrinth 9 kann auch mit anderen Ausführungsvarianten der vorgestellten Erfindung verwendet werden.

Das Material des Schalllabyrinths 9 kann ebenfalls ganz oder teilweise aus einem Schallisolierenden Material gefertigt sein. Beispielweise kann ein Kunststoff- oder Metallblech zur Formgebung und Stabilität verwendet werden, dass mit einem Schaumstoff zur Schallabsorbierung überzogen wird. Auf diese Weise wird dafür gesorgt, dass Schall der durch das Auftreffen der strömenden Luft auf den Wärmeübertrager 3 entsteht, vom Schalllabyrinth absorbiert wird und nicht durch mehrfache Reflexionen an den Wandungen des Gehäuses 6 und den Elementen des Schalllabyrinths 9 nach außen gelangen kann.

Die Erfindung ist nicht auf die vorstehend beschriebenen bevorzugten Ausführungsbeispiele beschränkt. Vielmehr ist eine Vielzahl von Varianten und Abwandlungen Rahmen der Erfindung möglich, die durch die Patentansprüche definiert wird.

### Bezugszeichenliste

- 1: Kühlmodul
- 2: Traktionsbatterie
- 3: Wärmeübertrager
- 4: Kühlmittelkreislauf
- 5: Radiallüfter
- 6: Gehäuse
- 7: Luftzuführungsöffnung / Lufteintrittsbereich
- 8: Schallisolierung
- 9: Schalllabyrinth
- 10: Luftaustrittsöffnung / Luftaustrittsbereich
- 11: Zirkulationspumpe
- 12: Kühlmittelleitung

## Patentansprüche

1. Kraftfahrzeug, vorzugsweise Nutzfahrzeug, das zumindest teilweise elektrisch angetrieben ist, aufweisend:
eine Traktionsbatterie (2);
ein Kühlmodul (1) zur Kühlung der Traktionsbatterie (2) des Kraftfahrzeugs, vorzugsweise Nutzfahrzeugs, umfassend
einen luftgekühlten Wärmeübertrager (3), der von einem Kühlmittel durchströmbar und an einen Kühlmittelkreislauf (4) anschließbar ist, und
einen Lüfter (5) zur Luftkühlung des Wärmeübertragers (3), wobei der Lüfter (5) als Radiallüfter ausgeführt ist, wobei das Kraftfahrzeug dazu ausgebildet ist, das Kühlmodul (1) zum Kühlen der Traktionsbatterie (2) während des Aufladens an einer externen Ladestation zu verwenden; und
ein Fahrkühlmodul zur Kühlung der Traktionsbatterie (2) im Fahrbetrieb des Kraftfahrzeugs, wobei das Fahrkühlmodul umfasst:
einen luftgekühlten zweiten Wärmeübertrager, der von einem Kühlmittel durchströmbar und an einen Kühlmittelkreislauf (4) anschließbar ist, und
einen zweiten Lüfter zur Luftkühlung des Wärmeübertragers, wobei der zweite Lüfter als Axiallüfter ausgeführt ist, wobei das Kraftfahrzeug dazu ausgebildet ist,
im Fahrbetrieb des Kraftfahrzeugs die Traktionsbatterie (2) primär mittels des Fahrkühlmoduls zu kühlen, derart, dass hierbei das Kühlmodul (1) nicht oder nur unterstützend zum Fahrkühlmodul betrieben wird; und
im Nicht-Fahrbetrieb des Kraftfahrzeugs die Traktionsbatterie (2) beim Ladevorgang primär mittels des Kühlmoduls (1) zu kühlen, derart, dass hierbei das Fahrkühlmodul nur unterstützend zum Kühlmodul (1) betrieben wird, sodass die gesamte Geräuschemission minimiert wird.

2. Kraftfahrzeug nach Anspruch 1, wobei
das Kühlmodul (1) in einer baulichen Einheit bereitgestellt ist; und/oder
der Wärmeübertrager (3) und der Lüfter (5) von einem gemeinsamen Gehäuse (6) umhaust sind.

3. Kraftfahrzeug nach Anspruch 1 oder 2, wobei
der Wärmeübertrager (3) stromauf zu einer Luftzuführungsöffnung des Radiallüfters (5) angeordnet ist, oder der Wärmeübertrager (3) stromab zu einer Luftaustrittsöffnung des Radiallüfters (5) angeordnet ist.

4. Kraftfahrzeug nach einem der vorherigen Ansprüche, wobei der Wärmeübertrager (3) einen ersten Wärmeübertragerabschnitt umfasst, der stromauf zu einer Luftzuführungsöffnung (7) des Radiallüfters (5) angeordnet ist, und einen zweiten Wärmeübertragerabschnitt umfasst, der stromab einer Luftaustrittsöffnung (10) des Radiallüfters (5) angeordnet ist.

5. Kraftfahrzeug nach Anspruch 4, wobei der zweite Wärmeübertragerabschnitt
mantelförmig um den Radiallüfter (5) herum angeordnet ist, vorzugsweise zylinderförmig oder abschnittsweise quaderförmig um den Radiallüfter (5) herum angeordnet ist; oder
lediglich an einer Seite eines Radiallüfters (5) angeordnet ist.

6. Kraftfahrzeug nach einem der vorherigen Ansprüche, ferner umfassend
eine Schallisolierung (8), vorzugsweise einen akustischen Absorber oder ein schallabsorbierendes Material, mit dem das Kühlmodul (1) zumindest partiell ausgekleidet ist.

7. Kraftfahrzeug nach Anspruch 6, wobei die Schallisolierung (8)
an einem Lufteintrittsbereich (7) des Kühlmoduls angeordnet ist, und/oder
an einem Luftaustrittsbereich (10) des Kühlmoduls angeordnet ist.

8. Kraftfahrzeug nach Anspruch 6 oder 7, wobei
ein Gehäuse (6) des Kühlmoduls schallisoliert ist, vorzugsweise im Wesentlichen eine komplette Außenwandung des Gehäuses (6) schallisoliert ist, beispielsweise mit einem schallabsorbierenden Material ausgekleidet ist.

9. Kraftfahrzeug nach einem der vorherigen Ansprüche, ferner umfassend
ein Schalllabyrinth (9), das an einem Lufteintrittsbereich (7) und/oder einem Luftaustrittsbereich (10) des Kühlmoduls (1) angeordnet ist.

10. Kraftfahrzeug nach einem der vorherigen Ansprüche wobei
eine Rotationsachse des Radiallüfters (5) parallel zur Lufteintrittsrichtung ist; oder
der Radiallüfter (5) als Doppelradialgebläse ausgeführt ist, dessen Rotationsachse senkrecht zur einer Lufteintrittsrichtung ist.

11. Kraftfahrzeug nach einem der vorherigen Ansprüche, ferner aufweisend:
einen Kühlkreislauf (4) für die Traktionsbatterie (2), der eine Zirkulationspumpe (11), und eine Kühlmittelleitung (12), die abschnittsweise die Traktionsbatterie (2) durchströmt, und/oder die abschnittsweise durch die Traktionsbatterie (2) geführt ist und/oder an diese zur Bereitstellung einer Kühlmittelzufuhr- und abfuhr angeschlossen ist, umfasst, wobei der Wärmeübertrager (3) des Kühlmoduls (1) an den Kühlkreislauf (4) angeschlossen ist oder an einen mit dem Kühlkreislauf (4) thermisch gekoppelten Kältekreislauf oder Hochtemperatur-Kühlkreislauf angeschlossen ist.

## Claims

1. A motor vehicle, preferably a utility vehicle, which is at least partially electrically powered, comprising:
a traction battery (2);
a cooling module (1) for cooling the traction battery (2) of the motor vehicle, preferably a utility vehicle, comprising
an air-cooled heat exchanger (3) through which a coolant can flow and which can be connected to a coolant circuit (4), and
a fan (5) for air cooling of the heat exchanger (3), the fan (5) being configured as a radial fan, the motor vehicle being configured to use the cooling module (1) for cooling the traction battery (2) during charging at an external charging station; and
a cooling module for cooling the traction battery (2) when the motor vehicle is in motion, the cooling module comprising:
an air-cooled second heat exchanger through which a coolant can flow and which can be connected to a coolant circuit (4), and
a second fan for air cooling of the heat exchanger, the second fan being configured as an axial fan, the motor vehicle being configured to
cool the traction battery (2) primarily by means of the driving cooling module when the motor vehicle is in the driving mode, in such a way that the cooling module (1) is not operated or is only operated in a supporting manner with respect to the driving cooling module; and
when the motor vehicle is not in motion, to cool the traction battery (2) during the charging process primarily by means of the cooling module (1), in such a way that the driving cooling module is only operated in a supporting manner to the cooling module (1), so that the total noise emission is minimised.

2. A motor vehicle according to claim 1, wherein
the cooling module (1) is provided in a structural unit; and/or the heat exchanger (3) and the fan (5) are enclosed by a common housing (6).

3. A motor vehicle according to claim 1 or 2,
the heat exchanger (3) being arranged upstream of an air supply opening of the radial fan (5), or the heat exchanger (3) being arranged downstream of an air outlet opening of the radial fan (5).

4. Aa motor vehicle according to one of the previous claims,
wherein the heat exchanger (3) comprises a first heat exchanger section, which is arranged upstream of an air supply opening (7) of the radial fan (5), and a second heat exchanger section, which is arranged downstream of an air outlet opening (10) of the radial fan (5).

5. A motor vehicle according to claim 4, wherein the second heat exchanger section
is arranged around the radial fan (5) in the form of a jacket, is preferably arranged around the radial fan (5) in the form of a cylinder or in sections in the form of a cuboid, or
is arranged on only one side of a radial fan (5).

6. A motor vehicle according to one of the previous claims, further comprising
a sound insulation (8), preferably an acoustic absorber or a sound-absorbing material, with which the cooling module (1) is at least partially lined.

7. A motor vehicle according to claim 6, wherein the sound insulation (8)
is arranged at an air inlet region (7) of the cooling module and/or
is arranged at an air outlet region (10) of the cooling module.

8. A motor vehicle according to claim 6 or 7, wherein
a housing (6) of the cooling module is sound-insulated, preferably substantially a complete outer wall of the housing (6) is sound-insulated, for example is lined with a sound-absorbing material.

9. A motor vehicle according to one of the previous claims, further comprising
a sound labyrinth (9) arranged at an air inlet area (7) and/or an air outlet area (10) of the cooling module (1).

10. A motor vehicle according to one of the previous claims, wherein
an axis of rotation of the radial fan (5) is parallel to the air inlet direction; or
the radial fan (5) is configured as a double radial blower, the axis of rotation of which is perpendicular to an air inlet direction.

11. A motor vehicle according to one of the previous claims, further comprising:
a cooling circuit (4) for the traction battery (2), which comprises a circulation pump (11), and a coolant line (12) which flows through sections of the traction battery (2) and/or is routed through sections of the traction battery (2) and/or is connected to the latter in order to provide a coolant supply and coolant discharge, the heat exchanger (3) of the cooling module (1) being connected to the cooling circuit (4) or being connected to a refrigeration circuit or a high-temperature cooling circuit that is thermally coupled to the cooling circuit (4).

## Revendications

1. Véhicule automobile, de préférence véhicule utilitaire, qui est entraîné au moins partiellement de manière électrique, présentant :
une batterie de traction (2) ;
un module de refroidissement (1) pour refroidir la batterie de traction (2) du véhicule automobile, de préférence du véhicule utilitaire, comprenant
un échangeur thermique refroidi à l'air (3) qui peut être traversé par un agent réfrigérant et raccordé à un circuit de refroidissement (4), et
un ventilateur (5) pour le refroidissement à air de l'échangeur thermique (3), le ventilateur (5) étant réalisé sous forme de ventilateur radial, dans lequel le véhicule automobile est réalisé pour utiliser le module de refroidissement (1) pour refroidir la batterie de traction (2) pendant la recharge au niveau d'une station de charge externe ; et
un module de refroidissement pendant la conduite pour refroidir la batterie de traction (2) en mode conduite du véhicule automobile, le module de refroidissement pendant la conduite comprenant :
un deuxième échangeur thermique refroidi à l'air qui peut être traversé par un agent réfrigérant et raccordé à un circuit de refroidissement (4), et
un deuxième ventilateur pour le refroidissement à air de l'échangeur thermique, le deuxième ventilateur étant réalisé sous forme de ventilateur axial, dans lequel le véhicule automobile est réalisé pour
refroidir, pendant le mode de conduite du véhicule automobile, la batterie de traction (2) principalement au moyen du module de refroidissement pendant la conduite de sorte que le module de refroidissement (1) ne fonctionne alors pas ou seulement en soutien au module de refroidissement pendant la conduite ; et
refroidir, pendant un mode autre que la conduite du véhicule automobile, la batterie de traction (2) lors du processus de charge au moyen du module de refroidissement (1) de sorte que le module de refroidissement pendant la conduite ne fonctionne qu'en soutien au module de refroidissement (1) de sorte que l'émission sonore globale est minimisée.

2. Véhicule automobile selon la revendication 1, dans lequel
le module de refroidissement (1) est fourni dans une unité constructive ; et/ou
l'échangeur thermique (3) et le ventilateur (5) sont entourés par un carter commun (6).

3. Véhicule automobile selon la revendication 1 ou 2, dans lequel
l'échangeur thermique (3) est disposé en amont d'un orifice d'alimentation en air du ventilateur radial (5),
ou l'échangeur thermique (3) est disposé en aval d'un orifice de sortie d'air du ventilateur radial (5).

4. Véhicule automobile selon l'une quelconque des revendications précédentes, dans lequel l'échangeur thermique (3) comprend une première partie d'échangeur thermique qui est disposée en amont d'un orifice d'alimentation en air (7) du ventilateur radial (5) et comprend une deuxième partie d'échangeur thermique qui est disposée en aval d'une ouverture de sortie d'air (10) du ventilateur radial (5).

5. Véhicule automobile selon la revendication 4, dans lequel la deuxième partie d'échangeur thermique
est disposée en forme d'enveloppe autour du ventilateur radial (5), de préférence de manière cylindrique ou par endroits parallélépipédique autour du ventilateur radial (5) ; ou
est disposée seulement sur un côté d'un ventilateur radial (5).

6. Véhicule automobile selon l'une quelconque des revendications précédentes, présentant en outre
une isolation acoustique (8), de préférence un absorbeur acoustique ou un matériau absorbant le son avec lequel le module de refroidissement (1) est recouvert au moins partiellement.

7. Véhicule automobile selon la revendication 6, dans lequel l'isolation acoustique (8)
est disposée dans une zone d'entrée d'air (7) du module de refroidissement, et/ou
est disposée dans une zone de sortie d'air (10) du module de refroidissement.

8. Véhicule automobile selon la revendication 6 ou 7, dans lequel
un carter (6) du module de refroidissement est isolé acoustiquement, de préférence substantiellement toute une paroi extérieure du carter (6) est isolée acoustiquement, par exemple par un matériau absorbant le son.

9. Véhicule automobile selon l'une quelconque des revendications précédentes, présentant en outre
un labyrinthe sonore (9) qui est disposé dans une zone d'entrée d'air (7) et/ou une zone de sortie d'air (10) du module de refroidissement (1).

10. Véhicule automobile selon l'une quelconque des revendications précédentes, dans lequel
un axe de rotation du ventilateur radial (5) est parallèle à la direction d'entrée d'air ; ou
le ventilateur radial (5) est réalisé sous forme de soufflante radiale double dont l'axe de rotation est perpendiculaire à une direction d'entrée d'air.

11. Véhicule automobile selon l'une quelconque des revendications précédentes, présentant en outre :
un circuit de refroidissement (4) pour la batterie de traction (2) qui comprend une pompe de circulation (11), et une conduite d'agent réfrigérant (12) qui traverse par endroits la batterie de traction (2), et/ou qui est amenée par endroits à travers la batterie de traction (2), et/ou qui y est raccordée pour fournir une alimentation et une évacuation de l'agent réfrigérant, dans lequel l'échangeur thermique (3) du module de refroidissement (1) est raccordé au circuit de refroidissement (4) ou est raccordé à un circuit de réfrigération ou un circuit de refroidissement haute température couplé thermiquement au circuit de refroidissement (4).
